# EUROPEAN PATENT SPECIFICATION

(11) **EP 2 216 917 B1**
(45) Date of publication and mention of the grant of the patent: **13.04.2011**
(21) Application number: 09152187.2
(22) Date of filing: 05.02.2009
(51) Int. Cl.: H04B 7/06, H04B 7/08

(54) **Mobile wireless communications device having diversity antenna system and related method**
Tragbares drahtloses Kommunikationsgerät mit Diversity-Antennensystem und entsprechendes Verfahren
Dispositif de communication mobile sans fil doté d'un système à plusieurs antennes et procédé correspondant

(43) Date of publication of application: 11.08.2010
(73) Proprietor: RESEARCH IN MOTION LIMITED, Waterloo, Ontario N2L 3W8 (CA)
(72) Inventor: Man, Ying Ton, Waterloo, Ontario, N2L 3W8 (CA); Cooke, Adrian, Waterloo, Ontario, N2L 3W8 (CA); Wong, Joshua, Waterloo, Ontario, N2L 3W8 (CA); Qi, Yihong, Waterloo, Ontario, N2L 3W8 (CA)
(74) Representative: Hibbert, Juliet Jane Grace

(56) References cited:
- EP-A- 1 763 152
- US-A1- 2005 136 906

## Description

### Technical Field

The present disclosure relates to the field of communications devices, and more particularly, to communications devices that use diversity antenna systems.

### Background

One of the challenges of wireless communications, is designing suitable antennas that provide desired performance characteristics, yet are relatively small in size to fit within mobile devices. For example, with wireless devices such as mobile telephones, it is desirable to maintain the overall size of the telephone as small as possible. Furthermore, internal antennas are generally preferred over external antennas, as externally mounted antennas take up more space and may be damaged while traveling or through other uses.

These wireless devices often operate with cellular communication systems that continue to grow in popularity and have become an integral part of both personal and business communications. Moreover, as cellular telephone technology increases so too has the functionality of the devices. For example, many portable wireless communications devices now incorporate Personal Digital Assistant (PDA) features such as calendars, address books, task lists, calculators, memo and writing programs. These multi-function devices usually allow users to send and receive electronic mail (email) messages wirelessly and access the internet via a cellular network and/or a wireless local area network (WLAN), for example, when the devices include appropriate circuitry for WiFi and other IEEE 802.11 WLAN access. Many of the cellular communications use packet burst transmissions as part of a Global System for Mobile communications (GSM) system, which includes the 850 MHz, 900 MHz, 1800 MHz and 1900 MHz frequency bands. Although these mobile wireless communication devices function as a cellular telephone, as noted before, the devices can also operate and incorporate Personal Digital Assistant (PDA) features and send and received email and other messages wirelessly and across the internet via the cellular network and/or a wireless Local Area Network (LAN). This function can include access to "hot spots" as part of a WiFi network using IEEE 802.11 standards.

Recent carrier specifications stipulate the addition of diversity antenna in the new generation of wireless mobile communications devices. In order to achieve acceptable diversity performance however, the radiating elements must be electromagnetically isolated. In a mobile wireless communications device having a handheld form factor, achieving adequate isolation often is difficult depending on the specific designs. In some devices, there are two antennae in close proximity to each other that operate in the same frequency spectra (850 and 1900), for example. This configuration results in strong coupling between the two antennae and degrades the radiated performance as they interfere with each other destructively. A possible solution is to tune the destructive interference into another mutually exclusive operating frequency band, which does not require diversity (such as 900 and 1800) or if possible, outside of any operating frequencies. In a multi-band portable wireless communications device, moving the interference into a non-diversity band is insufficient since the interference remains and degrades performance in the non-diversity band.

As an example, in one mobile wireless communications device, diversity is required in the 850 and 1900 bands, but not in the 900 and 1800 bands. Furthermore, the 850 and 1900 bands are mutually exclusive of the 900 and 1800 bands because they do not operate simultaneously. If the interference is tuned to the 900 band, for example, acceptable diversity performance can be achieved. However, the problem may not be solved because if the handheld is operating in the 900 band, the interference could remain. In order to maintain the antenna performance in the 900 band, the diversity antenna should be electromagnetically invisible to the main antenna while operating in the non-diversity bands.

A portable handheld with main antenna and switchable diversity antenna is disclosed in EP-A-1 763 152.

### Summary

A mobile wireless communications device has a portable handheld housing. A circuit board is carried by the portable handheld housing. RF circuitry is carried by the circuit board. A diversity antenna and main antenna are carried by the portable handheld housing and coupled to the RF circuitry and operative together. The RF circuitry tunes the diversity antenna into a diversity communications frequency band to achieve a diversity mode of operation with the main antenna and tunes the diversity antenna into a non-diversity communications frequency band when cross-coupling has occurred from the diversity antenna to the main antenna when operating in the diversity communications frequency band. A switch is carried by the portable handheld housing and connected to the RF circuitry and coupled between the diversity and main antennae and disconnects the diversity antenna when operating in the non-diversity band to prevent cross-coupling from the diversity antenna to the main antenna.

In one non-limiting aspect the portable handheld housing includes an upper and lower portion. The diversity antenna, is located at the upper portion of the housing. The main antenna is located at the lower portion of the housing. In another aspect, the diversity antenna is formed from a plurality of antenna elements forming an antennae array. Each antenna element can include a respective switch that is controlled for individually turning ON and OFF selected antenna elements forming the array antenna to change a combined radiation pattern of the array antenna.

In another aspect the circuits board is configured substantially in size to the portable handheld housing. Each antenna element includes a respective switch such that the switch controls its respective antenna element for turning ON and OFF selected antenna elements and changing a combined radiation pattern of the array antenna. In another aspect the circuit board is configured substantially different in size to the portable handheld housing and the main antenna is carried by the circuit board. A cable is connected between the diversity antenna and circuit board and operative with the main antenna. In this example, the switch is located at either the end of the cable connected to the circuit board or at the end of the cable connected to the diversity antenna.

A method aspect is also set forth.

### Brief Description of the Drawings

Other objects, features and advantages of the present invention will become apparent from the detailed description of the invention which follows, when considered in light of the accompanying drawings in which:

FIG. 1 is a plan view showing the interior of a mobile wireless communications device and showing in greater detail the relative positioning of a main antenna, for example, a cellular antenna and a diversity antenna and showing related internal components.

FIG. 2 is a fragmentary view of a mobile wireless communications device and showing the diversity antenna as an antenna array on the printed circuit board (PCB) and the main or cellular antenna and each diversity antenna equipped with a switch.

FIG. 3 is another fragmentary view similar to FIG. 2, but showing a mobile wireless communications device in which the printed circuit board is smaller than the housing such as in the example of FIG. 1 and showing a cable connecting the diversity antenna and main antenna with at least one switch placed along the cable.

FIG. 4 is a flow diagram illustrating methods of operating the mobile wireless communications device in accordance with a non-limiting aspect using the diversity and main antennae and switches.

FIG. 5 is a schematic block diagram of an example of a mobile wireless communications device configured as a handheld device that can be used in accordance with non-limiting examples and illustrating basic internal components.

FIG. 6 is a front elevation view of the mobile wireless communications device of FIG. 5.

FIG. 7 is a schematic block diagram showing basic functional circuit components that can be used in the mobile wireless communications device of FIGS. 1-6 as described.

### Detailed Description

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

In accordance with non-limiting examples, the diversity antenna can be tuned to produce cross-coupling in a non-diversity mode band. When the mobile wireless communications device is in a non-diversity mode band, the diversity antenna is disconnected from the main antenna (such as a cellular antenna) for example, by using a switch, which disconnects the diversity antenna in the non-diversity bands. The connection becomes open circuit in non-diversity modes. This is useful in cases where the printed circuit board (PCB) is the same size as the housing. In those cases where the printed circuit board is smaller than the housing, a cable typically connect the main and diversity antennae and the switches are placed along the cable.

In one non-limiting example, the switch can also connect the main antenna into a different load in order to impart a different load impedance. This serves to enhance the performance of the main antenna. In these non-limiting examples, the mobile wireless communications device changes the tuning of the antenna to produce cross-coupling on a particular band while also allowing the switch to disconnect the diversity antenna in certain bands where it would produce the cross-coupling with the main antenna.

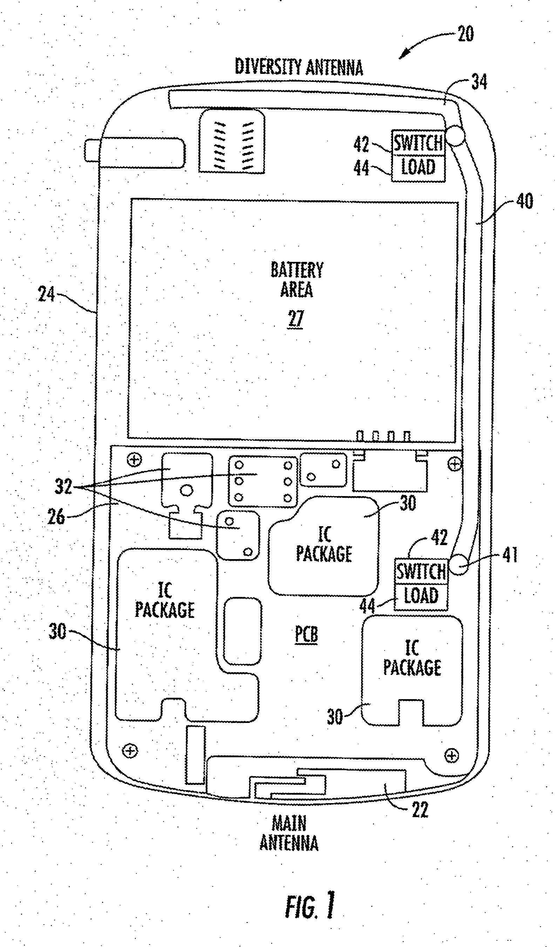

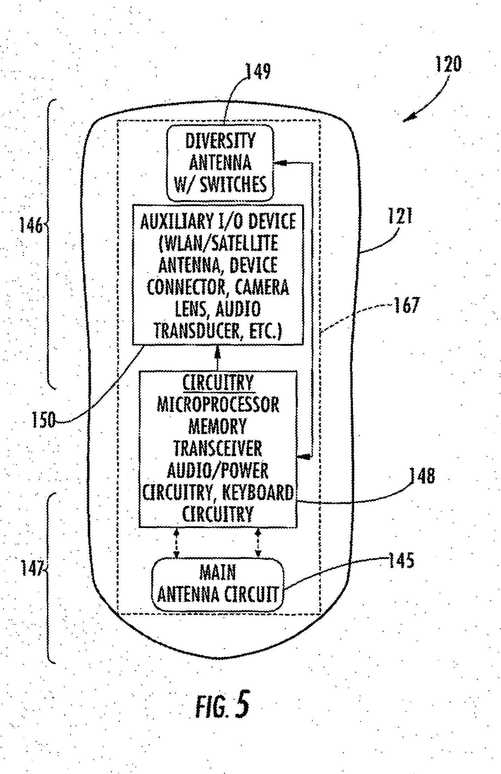

FIG. 1 shows a top plan view of the interior of a mobile wireless communications device **20** that incorporates a main antenna **22** such as at the bottom of a portable housing **24,** which contains a printed circuit board **26** that is smaller than the housing. A battery area **27** provides an area in which a battery is contained. In this examples, the main antenna **22** is a cellular antenna and could be positioned on the circuit board **26** or separate. The main antenna **22** could be on a separate board such as an antenna board. The printed circuit board **26** carries various circuit components such as the IC packages illustrated generally at **30** and described further below with reference to FIGS. 5-7 as non-limiting examples. Other electronic components are illustrated generally at **32.** The main antenna **22** in this example is a cellular antenna and illustrated at the bottom portion of the housing and typically operative as a multi-frequency antenna. It can have a unique geometric pattern or other configuration. The diversity antenna **34** is positioned at the other end (the top end) of the housing **24.** In this particular example, the diversity antenna **34** is connected by a cable **40** to the main antenna **22** through a respective connection point **41** on the circuit board. The cable **40** is used because the printed circuit board **26** is smaller than the housing **24.** Switches **42** that are used for disconnecting the diversity antenna **34** from the main antenna **22** are illustrated at possible switch locations are shown in this fragmentary drawing view. Each switch **42** is connected to a load **44.**

In this example of a mobile wireless communications device **20,** the main antenna **22** is located at the bottom portion of the housing **24** and the diversity antenna **34** at the top portion of the housing. The destructive interferences of the radiated far fields between the diversity antenna **34** and the main antenna **22** are reduced by the use of one or more switches **42,** which isolate the diversity antenna **34** from the main antenna **22** by rendering the diversity antenna, as well as any associated feed networks and cables, electromagnetically invisible to the main antennae while operating in the non-diversity bands. The switches **42** also provide a way to change the diversity antenna into different load impendances **44** and thereby potentially enhance the main antenna radiated performance.

For example, a possible switch **42** location is near the printed circuit board **26** or on the printed circuit board connected to the cable **40.** The switch **42** in this illustrated example connects into a different load impedance **44** such as a circuit structure contained on the printed circuit board or adjacent the switch at the diversity antenna.

As noted before, the device can have a "chassis" or printed circuit board **26** as roughly the same dimensions as the external housing **24.** In that example, a cable typically would not be required to connect with a circuit on the PCB. Another possible configuration is having the chassis or printed circuit board **26** with a significantly different configuration and dimensions as the external housing **24,** such as shown in the example of FIG. 1.

The diversity antenna **34** in this example is formed as an array, for example, an adaptive array antenna, which could be a single antenna with active elements or an array of similar or different antennae that could possibly change their combined radiation pattern as different conditions persist, depending on design. These antennae as described can be used both in the transmit and receive configuration.

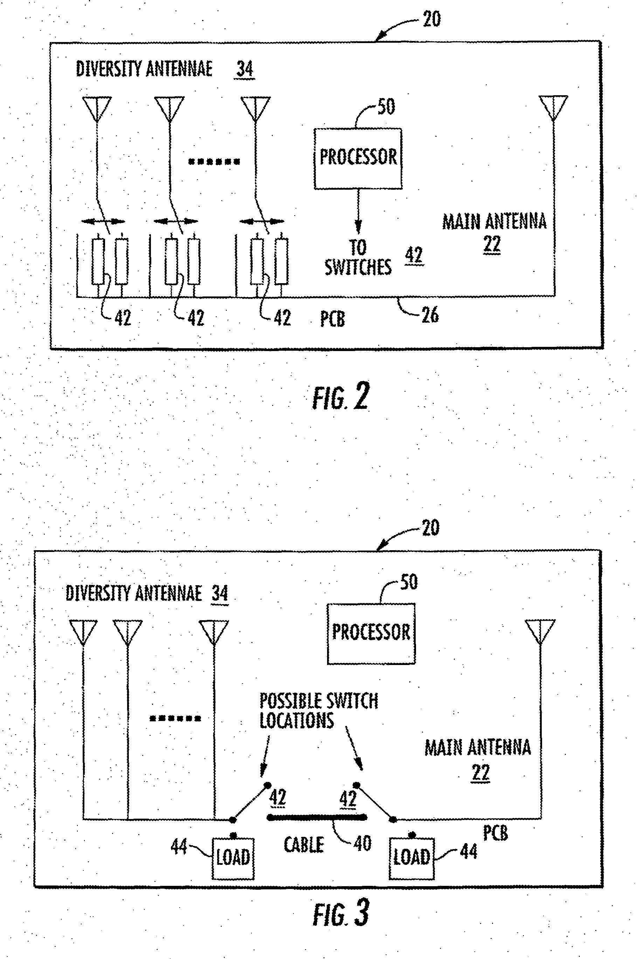

FIG. 2 is a fragmentary view of the interior of the device **20** with exaggerated dimensions and showing that the printed circuit board **26** has about the same dimensions as the external housing **24.** In this particular example, each diversity antenna **34** is equipped with a switch **42** that could be connected to a main processor or other antenna controller shown at **50** that could operate to turn on and off individual antenna elements using the switch. A switch **42** could also be a three-way switch to allow switching into a different load impedance.

FIG. 3 is a fragmentary view similar to that shown in FIG. 3 where the printed circuit board **26** dimensions are significantly different from the dimensions of the external housing **24** and the diversity antenna **24** is connected to a circuits trace on the printed circuit board using the cable **40.** The switch **42** may be placed at the printed circuit board end of the cable **40** or at the diversity end of the cable as illustrated. Possible physical locations using such a described implementation for FIG. 3 are shown in FIG. 1.

It should be understood that the main antenna **22** and diversity antenna **34,** which are illustrated at the respective bottom and top portions of the housing **24** in FIG. 1. could be located at different areas and positions within the mobile wireless communications device. Also, the diversity antenna **34** as an array could have a number of different elements that are located throughout the housing within the device instead of together or adjacent as shown in FIGS. 2 and 3.

Different switch designs can also be used. For example, a microelectromechanical (MEMS) switch could be formed separate or with different components and as a NEMS IC package. When the cable implementation is used such as shown in FIG. 2, a separate MEMS device could be incorporate and connected into the cable assembly. Also, a separate MEMS device as a switch could be located on a printed circuit board in either of the configurations shown in FIGS. 2 hand 3. Other switch configurations include a separate transistor switch could be used instead of a MEMS switch. Other switches are possible. Three-way switches can be used for switching into a different load impedance.

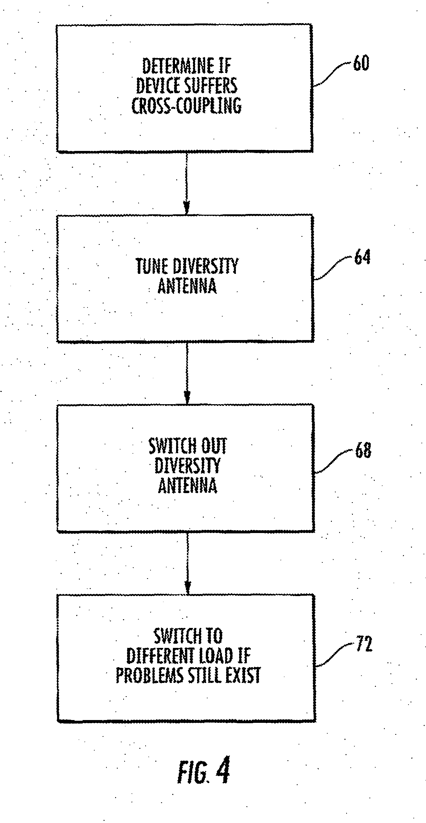

FIG. 4 illustrates a flow sequence in accordance with a non-limiting method of operation. Initially, a determination can be made if a problem has arisen when the device is operating and suffers cross-coupling between the diversity antenna and main antenna (Block 60). At this time, the diversity antenna can be tuned in the non-diversity mode band (Block 64). When the device is in the non-diversity mode band, the system disconnects the diversity antenna from the antenna using the switch (Block 68). If possible problems still exist, the system can switch the antenna to a different load (to a different load impedance), which enhances the performance, of the main antenna (Block 72).

A brief description will now proceed relative to FIGS. 5-7, which disclose an example of a mobile wireless communications device, for example, a handheld portable cellular radio, which can incorporate as non-limiting examples the various circuits that can be used with the main antenna **22** and diversity antenna **34** as described above. FIGS. 5-7 are representative non-limiting examples of the many different types of functional circuit components and their interconnection, and operative for use with the main and diversity antennae **22**, **34.**

referring now to FIG. 5, an example of a mobile wireless communications device 120, such as a handheld portable cellular radio is described as an example mobile wireless communications device that can be used. This device **120** illustratively includes a housing **121** having an upper portion **146** and a lower portion **147,** and a dielectric substrate (i.e., circuit board) **167,** such as a conventional printed circuit board (PCB) substrate, for example, carried by the housing. A housing cover (not shown in detail) would typically cover the front portion of the housing. The term circuit board **167** as used hereinafter can refer to any dielectric substrate, PCB, ceramic substrate or other circuit carrying structure for carrying signal circuits and electronic components within the mobile wireless communications device **120.** The illustrated housing **121** is a static housing, for example, as opposed to a flip or sliding housing, which is used in many cellular telephones. However, these and other housing configurations may also be used. In this example, the circuit board **167** is about she same size as the housing **121,** and thus, a cable connecting the diversity antenna and switches **149** and main antenna **145** is not used.

Circuitry **148** is carried by the circuit board **167,** such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **121** for supplying power to the circuitry **148.** The term RF circuitry could encompass the interoperable RF transceiver circuitry, power circuitry and audio circuitry. The circuit board carries the main antenna **145** at the lower end of the housing and diversity antenna **149** at the upper end of the housing in this non-limiting example, similar to that shown in FIG. 1. In this example, the diversity antenna **149** is an adaptive array antenna and is connected to the main antenna **145** through appropriate circuit traces, for example, contained on the circuit board and operates through the various components, including the microprocessor for controlling the switches and antenna components for the diversity antenna. The diversity antenna **149** in this example could be formed from individual antenna elements, each equipped with a switch such as shown in the example of FIG. 2.

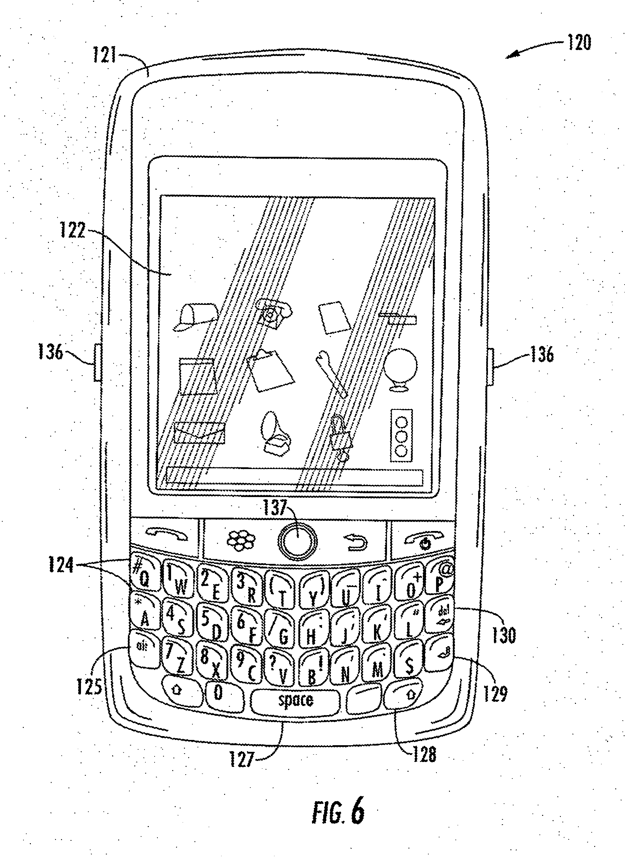

Furthermore, an audio output transducer (e.g., a speaker) is carried by an upper portion **146** of the housing **121** and connected to the circuitry **148.** One or more user input interface devices, such as a keypad (keyboard) **123** (FIG. 6), is also preferably carried by the housing **121** and connected to the circuitry **148.** The term keypad **123** as used herein also refers to the term keyboard, indicating the user input devices having lettered and/or numbered keys commonly known and other embodiments, including multi-top or predictive entry modes. Other examples of user input interface devices includes a track ball **137** and convenience keys **136,** which could be positioned on the, left and right sides of the housing. Of course, it will be appreciated that other user input interface devices (e.g., a stylus or touch screen interface) may be used in other embodiments. Also, other input interface devices could be used, for example, a mute/standby key, volume key or other menu. The housing could incorporate headset pads, USB ports, medina card slots and other similar keys or inputs.

The main (or cellular) antenna **145,** for example, a GSM antenna, is preferably positioned at the lower portion **147** in the housing (FIG. 5) and can be formed as a pattern of conductive traces that make an antenna circuit, which physically forms the antenna. Other antenna configurations can be used as non-limiting examples. This main antenna **145** is connected to the circuitry **148** on the main circuit board **167**. In one non-limiting example, the vain antenna **145** could be formed on an antenna circuit board that extends from the main circuit board at the lower portion of the housing. Also, a separate keyboard circuit board could be used. Of course, any separate antenna board in some cases could be used for each antenna, such as the main antenna, and the diversity antenna **149,** or both placed on a separate board and separated from each other. Other components could be placed on separate boards, for example, any transducers such as speakers and microphones could be mounted on separate boards. The diversity antenna **149** is located away from the main antenna **145** in this example, thus positioning the main antenna **145** at the bottom of the housing and the diversity antenna **149** at the top of the housing.

More particularly, a user will typically hold the upper portion of the housing **121** very close to his head so that any audio output transducer is directly next to his ear. Yet, the lower portion **147** of the housing **121** where an audio input transducer (i.e., microphone) is located need not be placed directly next to a user's mouth, and can be held away from the user's mouth. That is, holding the audio input transducer close to the user' s mouth may not only be uncomfortable for the user, but it may also distort the user's voice in some circumstances.

Another important benefit of placing the main antenna **145** adjacent the lower portion **147** of the housing **121** is that this may allow for less impact on antenna performance due to blockage by a user's hand. Users typically hold phoneys toward the middle to upper portion of the phone housing, and are therefore more likely to put their hands over such an antenna than they are an antenna mounted adjacent the lower portion **147** of the housing 121. Accordingly, more reliable performance may be achieved by placing the main antenna **145** adjacent the lower portion **147** of the housing **121.**

Still another benefit of this configuration is that it provides more room for one or more auxiliary input/output (I/O) devices 150 to be carried at the upper portion **146** or the housing. Furthermore, by separating the main antenna **145** from the auxiliary I/O device(s) **150**, this may allow for reduced interference therebetween.

Examples of auxiliary I/O devices **150** could include another antenna besides a diversity antenna, such as a WiFi or WLAN (e.g., Bluetooth, IEEE 802.11) antenna for providing WLAN communication capabilities and/or a satellite positioning system (e.g., GPS, Galileo, etc.) antenna for providing position location capabilities, as will be appreciated by those skilled in the art. Other examples of auxiliary I/O devices 150 includes a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input /output" as used herein for the auxiliary I/O device(s) **1.50** means that such devices may have input and/or output capabilities, and they need not provide both in all embodiments. That is, devices such as camera lenses may only receive an optical input, for example, while a headphone jack may only provide an audio output.

The device 120 further illustratively includes a display **122** (FIG. 6), for example, a liquid crystal display (LCD) carried by the housing **121** and connected to the circuitry **148** (FIG. 5). Convenience keys **136** and track ball **137** can also be connected to the circuitry **148** for allowing a user to navigate menus, text, etc., as will be appreciated by those skilled in the art. The track ball **137** may also be referred to as a "thumb wheel" or a "track wheel" in some instances and positioned in different locations. The keypad **123** illustratively includes a plurality of multi-symbol keys **124** each having indicia of a plurality of respective symbols thereon. The keypad **123** also illustratively includes an alternate function key 125, a space key **127,** a shift key **128,** a return (or enter) key **129,** and a backspace/delete key **130.**

Some keys could also be used to enter a "*" symbol upon first pressing or actuating the alternate function key **125.** Similarly, the space key **127,** shift key **128** and backspace key **130** could be used to enter a "0" and "#", respectively, upon first actuating the alternate function key **125** in some examples. The keypad **123** could include an escape key, an end or power key, and a convenience (i.e., menu) key for use in accessing an expanded home screen and placing cellular telephone calls. Many of these keys can be located in different positions.

Moreover, the symbols on each key **124** are arranged in top and bottom rows. The symbols in the bottom rows are entered when a user presses a key **124** without first pressing the alternate function key **125,** while the top row symbols are entered by first pressing the alternate function key in this example keyboard. As seen in FIG. 6, the multi-symbol keys **124** are arranged in the rows on the keypad **123.** Furthermore, the letter symbols on each of the keys **124** are arranged to define a QWERTY layout. That is, the letters on the keypad **123** are presented in a three-row format, with the letters of each row being in the same order and relative position as in a standard QWERTY keypad. Each row of keys can be arranged in columns.

Accordingly, the mobile wireless communications device **120** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc as will be appreciated by those skilled in the art.

The main antenna **145** and diversity antenna **149** operate together as a multi-frequency band antenna system, which provides enhanced transmission and reception characteristics over multiple operating frequencies. More particularly, the antennae are designed to provide high gain, desired impedance matching, and meet applicable SAR requirements over a relatively wide bandwidth and multiple frequency bands such as different cellular frequency bands. For example, the antennae can operate over five bands, for example, a 850 MHz Global System for Mobile Communications (GSM) band (GSM 850), a 900 MHz GSM band, a DCS band, a PCS band, and a WCDMA band (i.e., up to about 2100 MHz) (or CDMA 850/1900), although it may be used for other bands/frequencies as well as noted above. To conserve space, the main antenna **145** may advantageously be implemented in three dimensions although it may be implemented in two-dimensional or planar embodiments as well.

The mobile wireless communications device shown in FIGS. 5 and 6 can incorporate e-mail and messaging account and provide different functions such as composing e-mail, PIN messages, and SMS message. The device can manage messages through an appropriate menu that can be retrieved by choosing a messages icon. An address book function could add contacts, allow management of an address book, set address book options and mange SIM card phone books. A phone menu could allow for the making and answering of phone calls, using different phone features, managing phone call logs, setting phone options, and viewing phone information. A browser application could permit the browsing of web pages, configuring a browser, adding bookmarks, and changing browse options. Other applications could include a task, memo pad, calculator, alarm and games, as well as handheld options with various reference.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

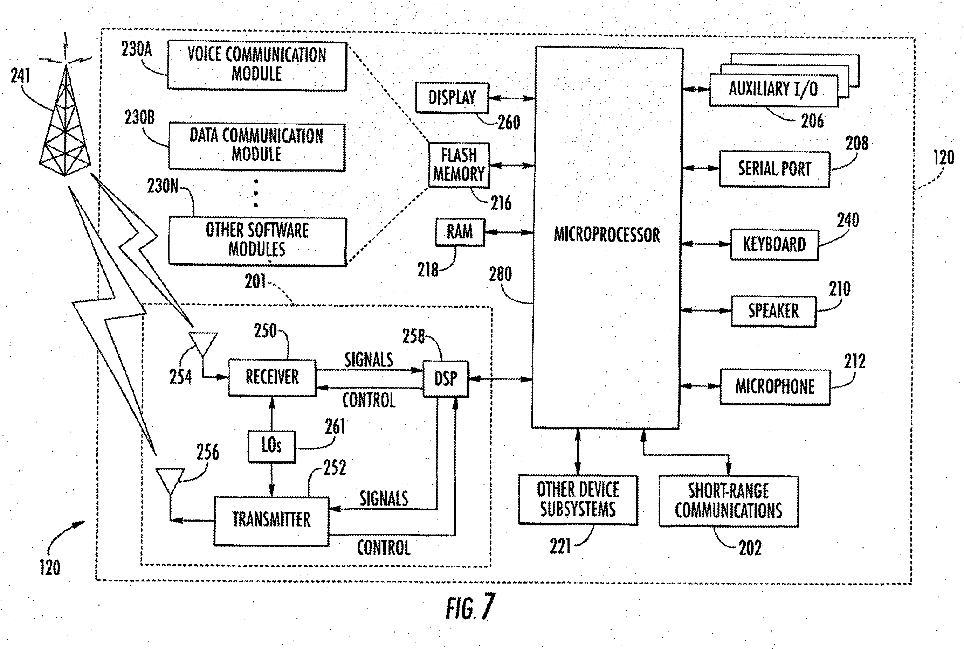

A non-limiting example of various functional components that can be used in the exemplary mobile wireless communications device 120 of FIGS. 1-6 is further described in the example below with reference to FIG. 7. The device **120** illustratively includes a housing **220,** a keypad **240** and an output device **260**. The output device **260** shown is preferably a display, which is preferably a full graphic LCD. Other types of output devices may alternatively be used. A processing device **280** is contained within the housing **220** and is coupled between the keypad **240** and the display **260.** The processing device **280** controls the operation of the display **260,** as well as the overall operation of the mobile device **120,** in response to actuation of keys on the keypad **240 by** the user.

The housing **220** may be elongated vertically, or may take on other sizes and shapes (including clamshell housing structures). The keypad may include a mode selection key, or other hardware or software for switching between text entry and telephony entry.

In addition to the processing device **280,** other parts of the mobile device **120** are shown schematically in FIG. 7. These include a communications subsystem **201;** a short-range communications subsystem **202;** the keypad **240** and the display **260,** along with other input/output devices **206, 208, 210** and **212;** as well as memory devices **216, 218** and various other device subsystems **221.** The mobile device **120** is preferably a two-way RF communications device having voice and data communications capabilities. In addition, the mobile device **120** preferably has the capability to communicate with other computer systems via the Internet.

Operating system software executed by the processing device **280** is preferably stored in a persistent store, such as the flash memory **216,** but may be stored in other types of memory devices, such as a read only memory (ROM) or similar storage element. In addition, system software, specific device applications, or parts thereof, may be temporarily loaded into a volatile store, such as the random access memory (RAM) **218**. Communications signals received by the mobile device may also be stored in the RAM **218.**

The processing device **280,** in addition to its operating system functions, enables execution of software applications **230A-230N** on the device **120.** A predetermined set of applications that control basic device operations, such as data and voice communications **230A** and **230B**, may be installed on the device **120** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **241.** Preferably, the PIM data items are seamlessly integrated, synchronized and updated via the wireless network **241** with the device user's corresponding data items stored or associated with a host computer system.

Communication functions, including data and voice communications, are performed through the communications subsystem **201,** and possibly through the short-range communications subsystem. The communications subsystem **201** includes a receiver **250,** a transmitter **252,** and one or more antennae **254** and **256.** In addition, the communications subsystem **201** also includes a processing module, such as a digital signal processor (DSP) **258,** and local oscillators (LOs) **261.** The specific design and implementation of the communications subsystem **201** is dependent upon the communications network in which the mobile device **120** is intended to operate. For example, the mobile device **120** may include a communications subsystem **201** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **120.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **120** may send and receive communications signals over the communication network **241.** Signals received from the communications network **241** by the antenna **254** are routed to the receiver **250,** which provides for signal amplification, frequency down conversion, filtering, channel selection, etc., and may also provide analog to digital conversion. Analog-to-digital conversion of the received signal allows the DSP **258** to perform more complex communications functions, such as demodulation and decoding. In a similar manner, signals to be transmitted to the network **241** are processed (e.g., modulated and encoded) by the DSP **258** and are then provided to the transmitter **252** for digital to analog conversion, frequency up conversion, filtering, amplification and transmission to the communication network **241** (or networks) via the antenna **256**.

In addition to processing communications signals, the DSP **258** provides for control of the receiver **250** and the transmitter **252.** For example, gains applied to communications signals in the receiver **250** and transmitter **252** may be adaptively controlled through automatic gain control algorithms implemented in the DSP **258.**

In a data communications mode, a received signal, such as a text message or web page download, is processed by the communications subsystem **201** and is input to the processing device **280.** The received signal is then further processed by the processing device **280** for an output to the display **260,** or alternatively to some other auxiliary I/O device **206.** A device user may also compose data items, such as e-mail messages, using the keypad **240** and/or some other auxiliary I/O device **206,** such as a touchpad, a rocker switch, a thumb-wheel, or some other type of input device. The composed data items may then be transmitted over the communications network **241** via the communications subsystem **201.**

In a voice communications mode, overall operation of the device is substantially similar to the data communications mode, except that received signals are output to a speaker **210,** and signals for transmission are generated by a microphone **212.** Alternative voice or audio I/O subsystems, such as a voice message recording subsystem, may also be implemented on the device **120.** In addition, the display **260** may also be utilised in voice communications mode, for example to display the identity of a calling party, the duration of a voice call, or other voice call related information.

Any short-range communications subsystem enables communication between the mobile device **120** and other proximate systems or devices, which need not necessarily be similar devices. For example, the short-range communications subsystem may include an infrared device and associated circuits and components, or a Bluetooth™ communications module to provide for communication with similarly-enabled systems and devices.

It should be understood that GSM is one type of preferred communications system and uses a radio interface that can have an uplink frequency band and downlink frequency band with about 25 MHz bandwidth, typically subdivided into 124 carrier frequency channels, each spaced about 200 KHz apart as non-limiting examples. Time division multiplexing can be used to allow about 8 speech channels per radio frequency channel, giving 8 radio time slots and 8 burst periods grouped into what is called a TDMA frame. For example, a channel data rate could be about 270.833 Kbps and a frame duration of about 4.615 milliseconds (MS) in one non-limiting example. The power output can vary from about 1, to about 2 watts.

Linear predictive coding (LPC) can also be used to reduce the bit rate and provide parameters for a filter to mimic a vocal track with speech encoded at about 13 Kbps. Four different cell sizes can be used in a GSM network, including macro, micro, pico and umbrella cells. A base station antenna can be installed on a master building above the average rooftop revel in a macrocell. In a microcell, the antenna height can be under the average rooftop level and used in urban areas. Microcells typically have a diameter of about a few dozen meters and are used indoors. Umbrella cells can cover shadowed regions or smaller cells. Typically, the longest distance for the GSM specification covered by an antenna is about **22** miles depending on antenna height, gain and propagation conditions.

GSM systems typically include a base station subsystem, a network and switching subsystem, and a General Packet Radio Service (GPRS) core network. A subscriber identify module (SIM) is usually implemented in the communications device, for examples, the well known SIM card, similar to a smart card containing the subscription information and phone book of a user. The user can also switch handsets or could change operators by changing a SIM.

The GSM signaling protocol has three general layers. Layer **1** is a physical layer using channel structures above the air interface. Layer **2** is the data link layer. Layer **3** is a signaling protocol, which include three sublayers. These include a Radio Resources Management sublayer to control the setup, maintenance and termination of radio and fixed channels, including handovers. A Mobility Management sublayer manages the location updating and registration procedures and secures the authentication. A Connection Management sublayer handlers general, call control and manages supplementary cervices and the short message service. Signaling between different entities such as the Home Location Register (HLR) and Visiting Location Register (VLR) can be accomplished through a Mobile Application Part (MAP) built upon the Transaction Capabilities Application Part (TCAP) of the top layer of the Signaling System No. 7.

A Radio Resources Management (RRM) sublayer can oversee the radio and fixed link establishment between the mobile station and an MSE.

It is also possible to used Enhanced Data Rates for GSM Evolution (EDGE), as an enhancement to General Packet Radio Service (GPRS) networks. EDGE can use 8 Phase Shift Keying (8 PSK) and Gaussian Minimum Shift Keying (GMSK) for different modulation and coding schemes. A three-bit word can be produced for every changing carrier phase. A rate adaptation algorithm can adapt the Modulation and Coding Scheme (MCS) according to the quality of the radio channel and the bit rate and robustness of data transmission. Base stations are typically modified for EDGE use.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device, comprising:
a portable handheld housing (24);
a circuit board (26) carried by the portable handheld housing and RF circuitry carried by the circuit board;
a diversity antenna (34) and main antenna (22) carried by the portable handheld housing and coupled to the RF circuitry and operative together wherein the RF circuitry tunes the diversity antenna into diversity communications frequency band to achieve a diversity mode of operation with the main antenna and tunes the diversity antenna into a non-diversity communications frequency band when cross-coupling has occurred from the diversity antenna to the main antenna when operating in the diversity communications frequency band; and
a switch (42) carried by the portable handheld housing and connected to the RF circuitry and coupled between the diversity and main antennae that disconnects the diversity antenna when operating in the non-diversity communications frequency band to prevent cross-coupling from the diversity antenna to the main antenna.

2. The mobile wireless communications device according to Claim 1, wherein the portable handheld housing further comprises an upper and lower portion and said diversity antenna is located at the upper portion of the housing and the main antenna is located at the lower portion of the housing.

3. The mobile wireless communications device according to Claim 1, wherein said diversity antenna comprises an array antenna comprising a plurality of antenna elements.

4. The mobile wireless communications device according to Claim 3, wherein the switch comprises a plurality of switches and each antenna element includes a respective switch that is controlled for individually turning ON and OFF selected antenna elements to charge a combined radiation pattern of the array antenna.

5. The mobile wireless communications device according to Claim 1, wherein said switch comprises a microelectromechanical (MEMS) switch.

6. The mobile wireless communications device according to Claim 1, wherein said circuit board is configured substantially in size to the portable handheld housing and said diversity antenna comprises an antenna array carried by the circuit board and comprising a plurality of antenna elements and said switch comprises a plurality of switches and each antenna element includes a respective switch that is controlled for individually turning ON and OFF selected antenna elements forming the array antenna to change a combined radiation pattern of the array antenna.

7. The mobile wireless communications device according to Claim 1, wherein said circuit board is configured substantially different in size to the portable handheld housing and said main antenna is carried by the circuit board, and further comprising a cable (40) connected to the diversity antenna and circuit board and operative with the main antenna.

8. The mobile wireless communications device according to Claim 7, wherein said switch is located at one of either the end of the cable connected to the circuit board or the end of the cable connected to the diversity antenna.

9. The Mobile wireless communications device according to Claim 1, and further comprising a load (44) having a different impedance connected to the switch for imparting a different load impedance when the switch is switched to the load.

10. The mobile wireless communications device according to Claim 1, and further comprising a display and user input device both carried by the portable handheld housing and connected to the RF circuitry.

11. The mobile wireless communications device according to Claim 1, wherein said main antenna is operative at frequencies in the Global System for Mobile (GSM) frequency communications band.

12. The mobile wireless communications device, according to Claim 1, wherein the portable handheld housing includes an upper portion and a lower portion, and the main antenna is carried by the circuit board at the lower portion of the housing and coupled to the RF circuitry and configured for multi-frequency cellular phone communications, including frequencies in the Global System for Mobile (GSM) communications band, and the diversity antenna is formed as an array antenna and carried by the portable handheld housing at the upper portion of the portable handheld housing and coupled to the RF circuitry.

13. A method of operating a mobile wireless communications device, wherein the mobile wireless communications device comprises a portable handheld housing, a circuit board carried by the portable handheld housing, RF circuitry carried by the circuit board and a diversity antenna and main antenna carried by the portable handheld housing and coupled to the RF circuitry and operative together, wherein the method comprises:
tuning the diversity antenna into a diversity communications frequency band to achieve a diversity mode of operation with the main antenna;
tuning the diversity antenna into a non-diversity communications frequency band when cross-coupling occurs from the diversity antenna to the main antenna when operating in the diversity communications frequency band; and
disconnecting the diversity antenna when operating in the non-diversity communications frequency band to prevent cross-coupling from the diversity antenna to the main antenna.

14. The method according to Claim 13, and further comprising switching the diversity antenna into a different load impedance.

15. The method according to Claim 13, and further comprising the diversity antenna formed as an array antenna having individual antenna elements and individually turning ON and OFF selected antenna elements to change a combined radiation pattern of the array antenna.

## Patentansprüche

1. Mobile drahtlose Kommunikationsvorrichtung, die aufweist:
ein tragbares handgehaltenes Gehäuse (24);
eine Leiterplatte (26), die in dem tragbaren handgehaltenen Gehäuse getragen wird, und RF-Schaltungen, die von der Leiterplatte getragen werden;
eine Diversitätsantenne (34) und eine Hauptantenne (22), die von dem tragbaren handgehaltenen Gehäuse getragen werden und mit den RF-Schaltungen gekoppelt sind und zusammen betriebsfähig sind, wobei die RF-Schaltungen die Diversitätsantenne in ein Diversitäts-Kommunikationsfrequenzband einstellt, um einen Diversitäts-Betriebsmodus mit der Hauptantenne zu erzielen, und die Diversitätsantenne in ein Nicht-Diversitäts-Kommunikationsfrequenzband einstellt, wenn eine Kreuzkopplung von der Diversitätsantenne zu der Hauptantenne bei einem Betrieb in dem Diversitäts-Kommunikationsfrequenzband aufgetreten ist; und
einen Schalter (42), der von dem tragbaren handgehaltenen Gehäuse getragen wird und mit den RF-Schaltungen verbunden ist und zwischen der Diversitäts- und der Hauptantenne gekoppelt ist, der die Diversitätsantenne bei einem Betrieb in dem Nicht-Diversitäts-Kommunikationsfrequenzband trennt, um eine Kreuzkopplung von der Diversitätsantenne zu der Hauptantenne zu verhindern.

2. Mobile drahtlose Kommunikationsvorrichtung gemäß Anspruch 1, wobei das tragbare handgehaltene Gehäuse weiter einen oberen und einen unteren Teil aufweist und die Diversitätsantenne sich an dem oberen Teil des Gehäuses befindet und die Hauptantenne sich an dem unteren Teil des Gehäuses befindet.

3. Mobile drahtlose Kommunikationsvorrichtung gemäß Anspruch 1, wobei die Diversitätsantenne eine Array-Antenne aufweist, die eine Vielzahl von Antennenelementen aufweist.

4. Mobile drahtlose Kommunikationsvorrichtung gemäß Anspruch 3, wobei der Schalter eine Vielzahl von Schaltern aufweist und jedes Antennenelement einen jeweiligen Schalter umfasst, der gesteuert wird zum individuellen AN- und AUS-Schalten von ausgewählten Antennenelementen, um ein kombiniertes Strahlungsmuster der Array-Antenne zu ändern.

5. Mobile drahtlose Kommunikationsvorrichtung gemäß Anspruch 1, wobei der Schalter einen mikroelektromechanischen (MEMS - microelectromechanical) Schalter aufweist.

6. Mobile drahtlose Kommunikationsvorrichtung gemäß Anspruch 1, wobei die Leiterplatte im Wesentlichen auf die Größe des tragbaren handgehaltenen Gehäuses konfiguriert ist und die Diversitätsantenne ein Antennen-Array aufweist, das von der Leiterplatte getragen wird und eine Vielzahl von Antennenelementen aufweist, und der Schalter eine Vielzahl von Schaltern aufweist und jedes Antennenelement einen jeweiligen Schalter umfasst, der gesteuert wird zum individuellen AN- und AUS-Schalten von ausgewählten Antennenelementen, welche die Array-Antenne bilden, um ein kombiniertes Strahlungsmuster der Array-Antenne zu ändern.

7. Mobile drahtlose Kommunikationsvorrichtung gemäß Anspruch 1, wobei die Leiterplatte in der Größe im Wesentlichen unterschiedlich zu dem tragbaren handgehaltenen Gehäuse konfiguriert ist und die Hauptantenne durch die Leiterplatte getragen wird, und weiter ein Kabel (40) aufweist, das mit der Diversitätsantenne und der Leiterplatte verbunden ist und mit der Hauptantenne betriebsfähig ist.

8. Mobile drahtlose Kommunikationsvorrichtung gemäß Anspruch 7, wobei sich der Schalter entweder an dem Ende des Kabels, das mit der Leiterplatte verbunden ist, oder an dem Ende des Kabels befindet, das mit der Diversitätsantenne verbunden ist.

9. Mobile drahtlose Kommunikationsvorrichtung gemäß Anspruch 1, und weiter aufweisend eine Last (44), die eine andere Impedanz hat, die mit dem Schalter verbunden ist zum Weitergeben einer anderen Lastimpedanz, wenn der Schalter zu der Last geschaltet ist.

10. Mobile drahtlose Kommunikationsvorrichtung gemäß Anspruch 1, und weiter aufweisend eine Anzeige und eine Benutzereingabevorrichtung, die beide von dem tragbaren handgehaltenen Gehäuse getragen werden und mit den RF-Schaltungen verbunden sind.

11. Mobile drahtlose Kommunikationsvorrichtung gemäß Anspruch 1, wobei die Hauptantenne bei Frequenzen in dem GSM(Global System for Mobile)-Frequenzkommunikationsband betriebsfähig ist.

12. Mobile drahtlose Kommunikationsvorrichtung gemäß Anspruch 1, wobei das tragbare handgehaltene Gehäuse einen oberen Teil und einen unteren Teil umfasst und die Hauptantenne von der Leiterplatte an dem unteren Teil des Gehäuses getragen wird und mit den RF-Schaltungen gekoppelt ist und konfiguriert ist für zellulare Mehrfrequenz-Telefonkommunikationen, einschließlich Frequenzen in dem GSM(Global System for Mobile)-Kommunikationsband, und die Diversitätsantenne als eine Array-Antenne ausgebildet ist und von dem tragbaren handgehaltenen Gehäuse an dem oberen Teil des tragbaren handgehaltenen Gehäuses getragen wird und mit den RF-Schaltungen gekoppelt ist.

13. Verfahren zum Betrieb einer mobilen drahtlosen Kommunikationsvorrichtung, wobei die mobile drahtlose Kommunikationsvorrichtung aufweist ein tragbares handgehaltenes Gehäuse, eine Leiterplatte, die in dem tragbaren handgehaltenen Gehäuse getragen wird, RF-Schaltungen, die von der Leiterplatte getragen werden, und eine Diversitätsantenne und eine Hauptantenne, die von dem tragbaren handgehaltenen Gehäuse getragen werden und mit den RF-Schaltungen gekoppelt sind und zusammen betriebsfähig sind, wobei das Verfahren aufweist:
Einstellen der Diversitätsantenne in ein Diversitäts-Kommunikationsfrequenzband, um einen Diversitäts-Betriebsmodus mit der Hauptantenne zu erzielen;
Einstellen der Diversitätsantenne in ein Nicht-Diversitäts-Kommunikationsfrequenzband, wenn eine Kreuzkopplung von der Diversitätsantenne zu der Hauptantenne auftritt bei einem Betrieb in dem Diversitäts-Kommunikationsfrequenzband; und
Trennen der Diversitätsantenne bei einem Betrieb in dem Nicht-Diversitäts-Kommunikationsfrequenzband, um eine Kreuzkopplung von der Diversitätsantenne zu der Hauptantenne zu verhindern.

14. Verfahren gemäß Anspruch 13, und weiter aufweisend Umschalten der Diversitätsantenne in eine andere Lastimpedanz.

15. Verfahren gemäß Anspruch 13, und weiter aufweisend die Diversitätsantenne als eine Array-Antenne ausgebildet, die einzelne Antennenelemente hat, und individuelles AN- und AUS-Schalten ausgewählter Antennenelemente, um ein kombiniertes Strahlungsmuster der Array-Antenne zu ändern.

## Revendications

1. Dispositif de communication mobile sans fil, comprenant :
un boîtier portatif tenu à la main (24) ;
une carte de circuits (26), supportée par le boîtier portatif tenu à la main et un ensemble de circuits RF supportés par la carte de circuits ;
une antenne de diversité (34) et une antenne principale (22) supportées par le boîtier portatif tenu à la main et couplées à l'ensemble de circuits RF et fonctionnant avec ceux-ci, dans lequel l'ensemble de circuits RF syntonise l'antenne de diversité sur une bande de fréquence de communications en diversité afin de réaliser un mode de fonctionnement en diversité avec l'antenne principale et syntonise l'antenne de diversité sur une bande de fréquence de communication sans diversité lorsqu'un couplage réciproque s'est produit entre l'antenne de diversité et l'antenne principale pendant un fonctionnement dans la bande de fréquence de communications en diversité ; et
un commutateur (42), supporté par le boîtier portatif tenu à la main et connecté à l'ensemble de circuits RF et couplé entre l'antenne de diversité et l'antenne principale, qui déconnecte l'antenne de diversité pendant un fonctionnement dans la bande de fréquence de communications sans diversité afin d'éviter un couplage réciproque entre l'antenne de diversité et l'antenne principale.

2. Dispositif de communication mobile sans fil selon la revendication 1, dans lequel le boîtier portatif tenu à la main comprend en outre une partie supérieure et une partie inférieure et dans lequel ladite antenne de diversité est située dans la partie supérieure du boîtier et l'antenne principale est située dans la partie inférieure du boîtier.

3. Dispositif de communication mobile sans fil selon la revendication 1, dans lequel ladite antenne de diversité est constituée d'une antenne en réseau comprenant une pluralité d'éléments d'antenne.

4. Dispositif de communication mobile sans fil selon la revendication 3, dans lequel le commutateur comprend une pluralité de commutateurs et dans lequel chaque élément d'antenne comprend un commutateur respectif qui est commandé afin de mettre individuellement en marche et à l'arrêt des éléments d'antenne sélectionnés, afin de modifier un diagramme de rayonnement combiné des éléments d'antenne.

5. Dispositif de communication mobile sans fil selon la revendication 1, dans lequel ledit commutateur comprend un commutateur microélectromécanique (MEMS).

6. Dispositif de communication mobile sans fil selon la revendication 1, dans lequel ladite carte de circuits est configurée avec une taille qui correspond substantiellement au boîtier portatif tenu à la main, dans lequel ladite antenne de diversité comprend un réseau d'antennes supporté par la carte de circuits et comprenant une pluralité d'éléments d'antenne, dans lequel ledit commutateur comprend une pluralité de commutateurs et dans lequel chaque élément d'antenne comprend un commutateur respectif qui est commandé afin de mettre individuellement en marche et à l'arrêt des éléments d'antenne sélectionnés formant l'antenne en réseau, afin de modifier un diagramme de rayonnement combiné de l'antenne en réseau.

7. Dispositif de communication mobile sans fil selon la revendication 1, dans lequel ladite carte de circuits est configurée avec une taille qui est substantiellement différente de celle du boîtier portatif tenu à la main et dans lequel ladite antenne principale est supportée par la carte de circuits, comprenant en outre un câble (40) qui est connecté à l'antenne de diversité et à la carte de circuits et qui fonctionne avec l'antenne principale.

8. Dispositif de communication mobile sans fil selon la revendication 7, dans lequel ledit commutateur est implanté soit à l'extrémité du câble connectée à la carte de circuits, soit à l'extrémité du câble connectée à l'antenne de diversité.

9. Dispositif de communication mobile sans fil selon la revendication 1, comprenant en outre une charge (44) ayant une impédance différente qui est connectée au commutateur afin de donner une impédance de charge différente lorsque le commutateur est commuté vers la charge.

10. Dispositif de communication mobile sans fil selon la revendication 1, comprenant un outre un écran d'affichage et un dispositif de saisie par l'utilisateur, tous deux supportés par le boîtier portatif tenu à la main et connectés à l'ensemble de circuits RF.

11. Dispositif de communication mobile sans fil selon la revendication 1, dans lequel ladite antenne principale fonctionne à des fréquences qui se situent dans la bande de fréquences de communication du GSM (pour « *Global System for Mobile communication » -* Système mondial de communication mobile).

12. Dispositif de communication mobile sans fil selon la revendication 1, dans lequel le boîtier portatif tenu à la main comprend une partie supérieure et une partie inférieure, dans lequel l'antenne principale est supportée par la carte de circuits dans la partie inférieure du boîtier, couplée à l'ensemble de circuits RF et configurée pour des communications téléphoniques cellulaires à fréquences multiples, y compris des fréquences sur la bande de communication GSM et dans lequel l'antenne de diversité prend la forme d'une antenne en réseau qui est supportée par le boîtier portatif tenu à la main dans la partie supérieure du boîtier portatif tenu à la main et qui est couplée à l'ensemble de circuits RF.

13. Procédé de fonctionnement d'un dispositif de communication mobile sans fil, dans lequel le dispositif de communication mobile sans fil comprend un boîtier portatif tenu à la main, une carte de circuits supportée par le boîtier portatif tenu à la main, un ensemble de circuits RF supporté par la carte de circuits et une antenne de diversité ainsi qu'une antenne principale supportées par le boîtier portatif tenu à la main, et couplées à l'ensemble de circuits RF et fonctionnant ensemble, le procédé comprenant les étapes consistant à :
syntoniser l'antenne de diversité sur une bande de fréquences de communications en diversité afin de réaliser un mode de fonctionnement en diversité avec l'antenne principale ;
syntoniser l'antenne de diversité sur une bande de fréquences de communications sans diversité lorsqu'un couplage réciproque se produit entre l'antenne de diversité et l'antenne principale pendant un fonctionnement sur la bande de fréquences de communications en diversité ; et
déconnecter l'antenne de diversité, pendant le fonctionnement sur la bande de fréquences de communications sans diversité, afin d'éviter le couplage réciproque entre l'antenne de diversité et l'antenne principale.

14. Procédé selon la revendication 13, comprenant en outre l'étape consistant à commuter l'antenne de diversité avec une impédance de charge différente.

15. Procédé selon la revendication 13, comprenant en outre l'antenne de diversité formée d'une antenne en réseau comprenant des éléments d'antenne individuels et comportant l'étape consistant à mettre individuellement en marche et à l'arrêt les éléments d'antenne sélectionnés afin de modifier un diagramme de rayonnement combiné de l'antenne en réseau.
